# DEMANDE DE BREVET EUROPEEN

(11) **EP 1 466 762 A1**
(43) Date de publication de la demande: **13.10.2004**
(21) Numéro de dépôt: 04356041.6
(22) Date de dépôt: 26.03.2004
(51) Int. Cl.: B60C 27/10

(54) **Chaîne à neige pour véhicule automobile**

(30) Priorité: 08.04.2003 FR 0304348
(71) Demandeur: TARGA SA, 01400 Chatillon Sur Chalaronne (FR)
(72) Inventeur: Zhao, Jian De, Jinhua 321017 (CN)
(74) Mandataire: Maureau, Philippe

(57) **Abrégé**

Chaîne à neige pour véhicule automobile du type comportant un arceau (2) ou similaire destiné à être fermé du côté intérieur du pneumatique (3), à partir duquel s'étendent des éléments de chaîne en forme de tronçons (4) parallèles à l'axe de la roue ou en forme de losanges, reliés du coté extérieur du pneumatique (3) par un arceau (5) en chaîne ou similaire pouvant être fermé par un dispositif de fermeture et de mise en tension (6).

Le dispositif de fermeture (6) et de mise en tension comprend un boîtier (7) fixé à une extrémité de l'arceau (5) comprenant un enrouleur (9) pour une sangle (12) ou similaire dont l'extrémité libre est équipée d'un crochet (13) destiné à venir s'accrocher directement ou indirectement sur l'arceau extérieur (5), l'enrouleur (9) étant muni d'un mécanisme à cliquet de mise en tension de la sangle (12).

Ce dispositif à pour but de simplifier la pose, d'assurer une meilleure mise en tension de la chaîne à neige et de supprimer des remises en tension ultérieures.

## Description

La présente invention concerne une chaîne à neige pour véhicule automobile.

En l'état actuel de la technique, une chaîne à neige pour véhicule automobile comporte un arceau ou similaire destiné à être fermé du côté intérieur du pneumatique, à partir duquel s'étendent des éléments de chaîne en forme de tronçons parallèles à l'axe de la roue ou en forme de losanges joints par le sommet à des tronçons perpendiculaires à l'axe de la roue, reliés du coté extérieur du pneumatique par un arceau en chaîne ou similaire pouvant être fermé par au moins un dispositif de fermeture.

Les dispositifs de mise en tension existants peuvent être un anneau en caoutchouc attaché par des crochets ou une chaîne à arceaux ou similaire. Dans le cas de la chaîne à arceaux, la mise en tension peut être opérée par une fermeture à levier et excentrique ou par l'utilisation d'une chaîne fixée à une extrémité de l'arceau, passant dans un étrier solidaire de l'arceau, se terminant par un caoutchouc destiné à être accroché sur l'arceau du coté diamétralement opposé à l'étrier.

Les dispositifs existants de fermeture et de mise en tension ne permettent pas d'opérer une pose simple de la chaîne et limitent la mise en tension de la chaîne car cette mise en tension n'est pas progressive mais doit être réalisée en une étape. Cette mise en tension insuffisante implique que des remises en tension ultérieures doivent être réalisées et qu'une force physique importante soit appliquée.

La présente invention pallie ces inconvénients en simplifiant la pose de la chaîne et en permettant une meilleure mise en tension évitant les remises en tension ultérieures.

La présente invention pour objet une chaîne à neige pour véhicule automobile du type comportant un arceau ou similaire destiné à être fermé du côté intérieur du pneumatique, à partir duquel s'étendent des éléments de chaîne en forme de tronçons parallèles à l'axe de la roue ou en forme de losange joints par le sommet à des tronçons perpendiculaires à l'axe de la roue et reliés du coté extérieur du pneumatique par un arceau en chaîne ou similaire pouvant être fermé par au moins un dispositif de fermeture, caractérisé en ce que le dispositif de fermeture comprend un boîtier fixé à une extrémité de l'arceau, comprenant un enrouleur pour une sangle ou similaire dont l'extrémité libre est équipée d'un crochet destiné à venir s'accrocher directement ou indirectement sur l'arceau extérieur, l'enrouleur étant muni d'un mécanisme à cliquet de mise en tension de la sangle, le boîtier comprenant une chape dans laquelle est articulée l'enrouleur, l'axe de l'enrouleur étant muni d'au moins une roue à rochets, un levier destiné à l'entraînement de la roue à rochets étant monté pivotant autour de l'axe de l'enrouleur.

L'utilisation d'un mécanisme à cliquet permet de réaliser la mise en tension en plusieurs étapes pour obtenir une meilleure tension, sans avoir à appliquer une tension importante en une fois, ce qui facilite la pose.

Ce mécanisme présente trois positions :
- une position fermée, correspondant à une chaîne posée et en tension
- une position de mise en tension permettant de réaliser la mise en tension progressive
- une position d'ouverture, correspondant au déroulage de la sangle pour enlever la chaîne à neige.

L'utilisation d'un levier permet de diminuer la force nécessaire à la mise en tension de la sangle, la roue à rochets permet, associée à un moyen de blocage, d'empêcher le déroulage de la sangle dans les positions fermée et de mise en tension.

La présente invention est également caractérisée en ce que le levier destiné à l'entraînement de l'enrouleur comprend une chape dans laquelle est articulée l'axe de l'enrouleur.

La présente invention est également caractérisée en ce que le boîtier est équipé d'un cliquet de verrouillage de la roue à rochets, le levier est équipé d'un cliquet d'entraînement de la roue à rochets, ces deux cliquets étant maintenus en pression élastique contre la roue à rochets.

L'utilisation du cliquet de verrouillage permet avec la roue à rochet de remplir la fonction de blocage citée précédemment et d'empêcher le déroulage. L'utilisation du deuxième cliquet permet de réaliser l'entraînement de l'enrouleur par le levier.

La présente invention est également caractérisée en ce que le cliquet de verrouillage est constitué par une lame guidée dans deux fentes ménagées dans les deux parois latérales du boîtier, cette lame dépassant vers l'extérieur pour permettre un blocage du cliquet.

L'utilisation de moyens élastiques permet de définir plusieurs positions, permettant d'avoir un contact avec la roue à rochet dans la position fermée et dans la position de mise en tension, et de supprimer le contact avec la roue à rochets dans la position d'ouverture pour permettre le déroulage.

La présente invention est également caractérisée en ce que le cliquet d'entraînement est constitué par une lame guidée dans deux fentes ménagées dans les deux parois latérales du levier, cette lame dépassant vers l'extérieur pour permettre l'actionnement manuel du cliquet à l'encontre des moyens élastiques qui lui sont associés.

L'utilisation de moyens élastiques permet de définir plusieurs positions, permettant d'avoir un contact avec la roue à rochet dans la position fermée et dans la position de mise en tension, et de supprimer le contact avec la roue à rochets dans la position d'ouverture pour permettre le déroulage.

La présente invention est également caractérisée en ce qu'au moins une des ailes de la chape du boîtier comporte une butée limitant le mouvement de pivotement du levier d'entraînement du cliquet, un encoche étant prévue au-delà de la butée destinée à recevoir le cliquet d'entraînement et à maintenir celui-ci en position d'ouverture lors de l'opération de détension de la sangle.

La présence de la butée permet de garantir que le passage de la position de mise en tension vers la position d'ouverture soit effectué par l'opérateur et évite ainsi un déroulage non souhaité de la sangle. L'encoche permet de maintenir le cliquet en position d'ouverture, en supprimant le contact entre celui-ci et la ou les roues à rochets.

La présente invention est également caractérisée en ce que le cliquet de verrouillage prend appui sur au moins une rampe ménagée sur une des ailes du levier, la hauteur de cette rampe augmentant de façon à supprimer le contact entre le cliquet de verrouillage et la roue à rochet en position d'ouverture.

L'association de la rampe et de l'encoche permet de maintenir le cliquet en position d'ouverture, en supprimant les contacts des cliquets sur la roue à rochets.

La présente invention est également caractérisée en ce qu'une encoche de blocage du cliquet de verrouillage en position fermée est ménagée dans au moins une aile du levier, la partie du cliquet de verrouillage dépassant du boîtier étant destinée à être logée dans l'encoche de blocage ménagé dans l'aile du levier.

Cette encoche permet de garantir la conservation de la tension en position fermée, qui est la position lorsque le véhicule se déplace. Il s'agit donc d'une sécurité pouvant pallier les moyens de pressions élastiques présents.

La présente invention est également caractérisée en ce que le boîtier peut être fixé directement à une extrémité de l'arceau extérieur tandis que la sangle de l'enrouleur est équipée d'un crochet destiné à s'accrocher à l'autre extrémité de l'arceau extérieur.

La présente invention est également caractérisée en ce que le boîtier peut être fixé à une extrémité de l'arceau extérieur par un tronçon de chaîne destiné à passer, de façon réglable, dans un étrier solidaire de l'autre extrémité de l'arceau extérieur, l'extrémité de la sangle étant équipée d'un crochet étant fixé à une extrémité d'un ressort dont l'autre extrémité est destinée à être accrochée à l'arceau extérieur en un point de celui-ci sensiblement diamétralement opposé à l'étrier.

La présente invention est également caractérisée en ce que l'extrémité de la sangle étant équipée d'un crochet est fixée à une extrémité de l'arceau extérieur par un tronçon de chaîne destiné à passer, de façon réglable, dans un étrier solidaire de l'autre extrémité de l'arceau extérieur, le boîtier étant fixé à une extrémité d'un tronçon de chaîne destiné à être accrochée à l'arceau extérieur en un point de celui-ci sensiblement diamétralement opposé à l'étrier, deux tronçons de chaînes de l'arceau extérieur sensiblement diamétralement opposés entre eux et situés au milieux du demi-cercle délimités par l'étrier et le point de fixation du tronçon de chaîne relié au boitier sur l'arceau extérieur étant remplacés par des ressorts.

L'invention sera mieux comprise à l'aide de la description qui suit, en référence au dessin schématique annexé représentant plusieurs formes d'exécution.

La figure 1 est une vue générale d'une chaîne à neige montée sur un pneumatique.

La figure 2 est une vue de coté et à échelle agrandie du dispositif de fermeture et de mise en tension en position fermée.

La figure 3 est une vue en coupe longitudinale du dispositif de fermeture et de mise en tension au cours de la mise en tension.

La figure 4 est une vue en coupe longitudinale du dispositif de fermeture et de mise en tension en position d'ouverture.

La figure 5 est une vue en coupe de face selon V:V de figure 4 du dispositif de fermeture et de mise en tension en position d'ouverture.

Les figures 6 et 7 sont des vues générales de deux variantes d'exécution de cette chaîne à neige en position montée sur un pneumatique.

La présente invention concerne une chaîne à neige pour véhicule automobile comportant un arceau (2) destiné à être fermé du côté intérieur du pneumatique (3), à partir duquel s'étendent des éléments de chaîne (4) en forme de losanges joints par le sommet à des tronçons perpendiculaires à l'axe de la roue, reliés du coté extérieur du pneumatique (3) par un arceau en chaîne (5) fermé par un dispositif de fermeture et de mise en tension (6) caractéristique de l'invention.

Le dispositif de fermeture et de mise en tension (5) comprend un boîtier (7) fixé à une extrémité de l'arceau par un crochet (8) comprenant un enrouleur (9) pour une sangle (12) dont l'extrémité libre est équipée d'un crochet (13) destiné à venir s'accrocher directement sur l'arceau extérieur (5).

Le boîtier (7) comprend une chape dans laquelle est articulé l'enrouleur (9), l'axe de l'enrouleur (10) étant muni de deux roues à rochets (14). Autour de l'axe de l'enrouleur est articulé un levier (15) d'entraînement de l'enrouleur (9).

Un cliquet de verrouillage (16) est constitué par une lame guidée dans deux fentes ménagées (17) dans les deux parois latérales du boîtier (7) et dépassant vers l'extérieur. Ce cliquet est maintenu en pression élastique contre les roues à rochets (14) par un ressort (18)

Un cliquet d'entraînement (19) est constitué par une lame guidée dans deux fentes (20) ménagées dans les deux parois latérales du levier, cette lame dépassant vers l'extérieur pour permettre l'action manuelle du cliquet à l'encontre des moyens élastiques qui lui sont associés. Ce cliquet est maintenu en pression élastique contre les roues à rochets (14) par un ressort (22).

Les ailes de la chape du boîtier (7) comportent une butée (23) limitant le mouvement de pivotement du levier (15) d'entraînement du cliquet (19), un encoche (24) étant prévue au-delà de la butée (23) destinée à recevoir le cliquet d'entraînement (16) après que le cliquet (19) ait été escamoté à l'encontre de l'action du ressort (22) et à maintenir celui-ci en position d'ouverture lors de l'opération de détension de la sangle (12).

Deux rampes (26) sont ménagées sur les ailes du levier (15) sur lesquelles le cliquet de verrouillage (16) prend appui, la hauteur de cette rampe augmentant de façon à supprimer le contact entre le cliquet de verrouillage (16) et la roue à rochet (14) en position d'ouverture.

Une encoche (25) de blocage du cliquet de verrouillage (16) en position fermée est ménagée sur les deux ailes du levier (15). En position fermée, les parties du cliquet de verrouillage (16) dépassant du boîtier sont logées dans les encoches de blocage (25) ménagées dans les ailes du levier (15).

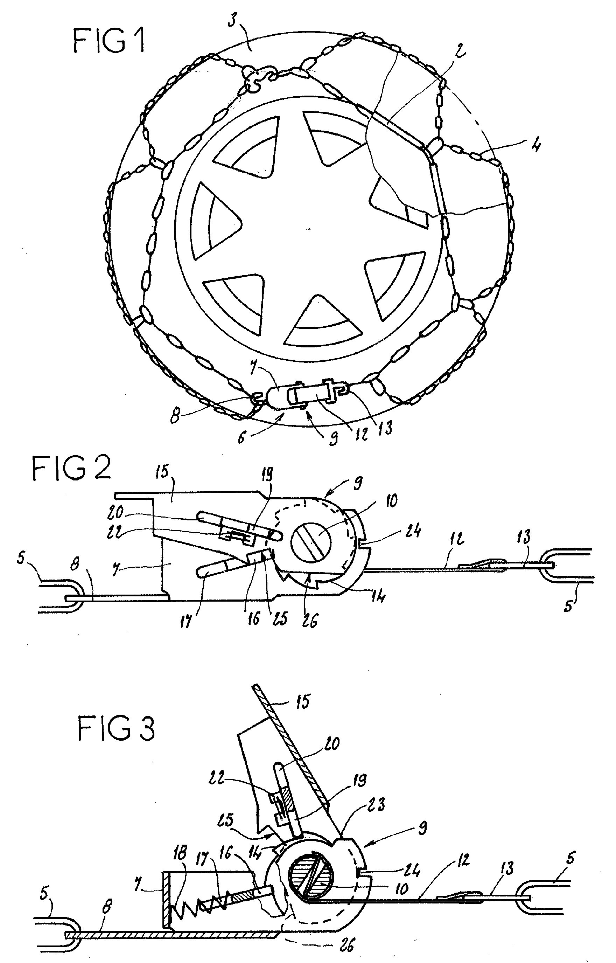

La figure 2 illustre la position fermée du dispositif de fermeture et de mise en tension (6). Cette position est adoptée lorsque le véhicule se déplace. Dans cette position, le levier (15) est replié contre le boîtier (7). La sangle (12) est maintenue en tension par l'enrouleur (9) dont la position est bloquée par le cliquet de verrouillage (16). Le cliquet de verrouillage (16) est maintenu en position dans l'encoche de blocage (25) prévue à cet effet dans le levier (15).

La figure 3 illustre le fonctionnement de la mise en tension de la sangle (12). Un opérateur réalise des mouvements successifs en éloignant (sens 1) et en rapprochant (sens 2) le levier (15) du boîtier (7). Dans le sens 1, la roue à rochet (14) est entraînée par le levier grâce au cliquet d'entraînement (19) qui est en butée sur les rochets. Les roues à rochets (14) entraînent l'enrouleur par son axe (10). La sangle s'enroule.

Dans le sens 2, le levier (15) n'entraîne pas la roue à rochet (14) car le cliquet d'entraînement (19) ne rencontre pas de butée, alors que dans le même temps le cliquet de verrouillage (16) est en butée sur les rochets. L'enrouleur (9) est donc bloqué. La sangle reste en position.

Ce fonctionnement permet de réaliser une mise en tension progressive de la chaîne à neige et d'obtenir une meilleure mise en tension.

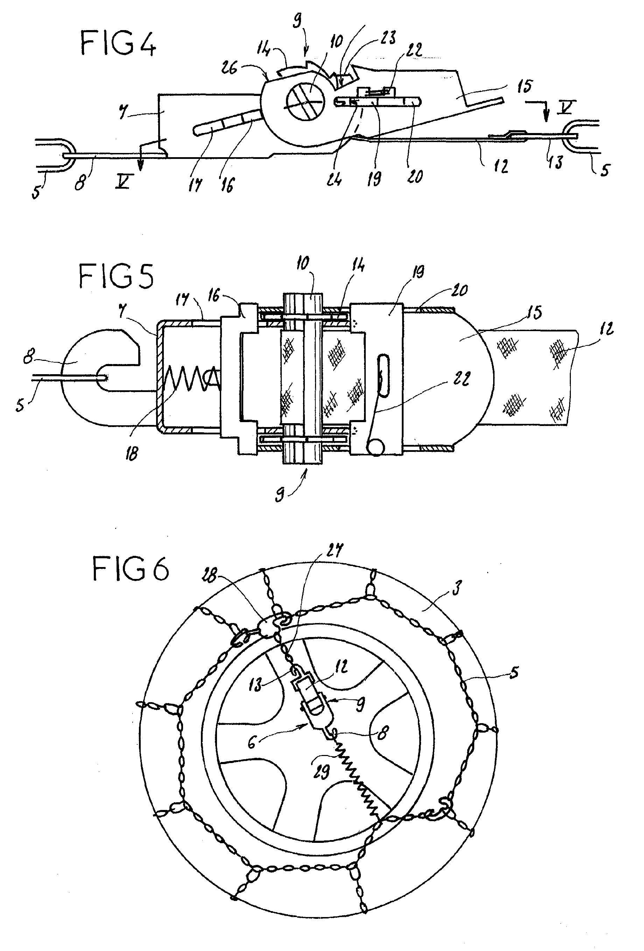

Les figures 4 et 5 montrent le dispositif de fermeture et de mise en tension (6) en position d'ouverture. Pour aboutir à cette position à partir de la position de mise en tension, l'opérateur saisit le cliquet d'entraînement (19) par les parties dépassant du boîtier (7) et entraîne le cliquet à l'encontre de l'action du ressort (22) en s'éloignant de l'axe de l'enrouleur (10). Cette action permet de dépasser les butées (23) aménagées sur les ailes du boîtier (7) et de positionner le cliquet dans l'encoche (24). Lors de ce mouvement, le cliquet de verrouillage (16) prend appui sur les rampes (26) des ailes du levier (15) dont la hauteur augmente pour supprimer le contact entre le cliquet de verrouillage (16) et la roue à rochet (14) de l'enrouleur (9).

Ainsi, en position d'ouverture, aucun des deux cliquets (16) et (19) n'est en contact avec la roue à rochets (14) comme ceci est illustré sur la vue en coupe 5. L'axe de l'enrouleur (10) peut pivoter librement. L'opérateur peut dérouler la sangle (12) en tirant sur celle-ci.

La figure 6 représente une fixation alternative du dispositif de fermeture et de mise en tension (6). le boîtier (7) est fixé à une extrémité de l'arceau extérieur (5) par un tronçon de chaîne (27) destiné à passer, de façon réglable, dans un étrier (28) solidaire de l'autre extrémité de l'arceau extérieur (5), l'extrémité de la sangle (12) étant équipée d'un crochet (13) étant fixé à une extrémité d'un ressort (24) dont l'autre extrémité est destinée à être accrochée à l'arceau extérieur (5) en un point de celui-ci sensiblement diamétralement opposé à l'étrier.

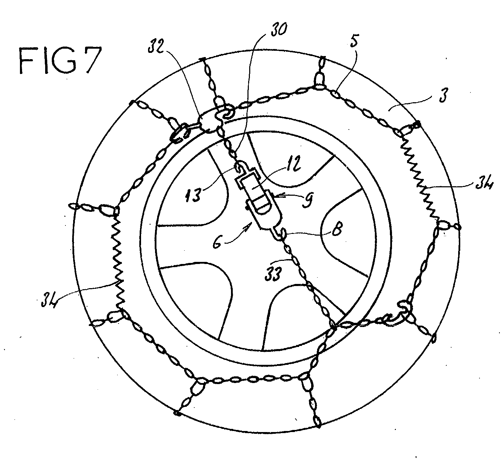

La figure 7 représente une fixation alternative du dispositif de fermeture et de mise en tension (6) de la chaîne. l'extrémité de la sangle (12) étant équipée d'un crochet (13) est fixé à une extrémité de l'arceau extérieur (5) par un tronçon de chaîne (30) destiné à passer, de façon réglable, dans un étrier (32) solidaire de l'autre extrémité de l'arceau extérieur (5), le boîtier (7) étant fixé à une extrémité d'un tronçon de chaîne (33) destiné à être accroché à l'arceau extérieur (5) en un point de celui-ci sensiblement diamétralement opposé à l'étrier (32), deux tronçons de chaines de l'arceau extérieur sensiblement diamétralement opposés entre eux et situés au milieux du demi-cercle délimités par l'étrier et le point de fixation du tronçon de chaîne relié au boitier sur l'arceau extérieur étant remplacés par des ressorts (34).

## Revendications

1. Chaîne à neige pour véhicule automobile du type comportant un arceau (2) ou similaire destiné à être fermé du côté intérieur du pneumatique (3), à partir duquel s'étendent des éléments de chaîne (4) en forme de tronçons parallèles à l'axe de la roue ou en forme de losange joints par le sommet à des tronçons perpendiculaires à l'axe de la roue et reliés du coté extérieur du pneumatique (3) par un arceau en chaîne (5) ou similaire pouvant être fermé par au moins un dispositif de fermeture (6), **caractérisé en ce que** le dispositif de fermeture (6) comprend un boîtier (7) fixé à une extrémité de l'arceau (5), comprenant un enrouleur (9) pour une sangle (12) ou similaire dont l'extrémité libre est équipée d'un crochet (13) destiné à venir s'accrocher directement ou indirectement sur l'arceau extérieur (5), l'enrouleur (9) étant muni d'un mécanisme à cliquet de mise en tension de la sangle (12), le boîtier (7) comprenant une chape dans laquelle est articulée l'enrouleur (9), l'axe de l'enrouleur (10) étant muni d'au moins une roue à rochets (14), un levier (15) destiné à l'entraînement de la roue à rochets (14) étant monté pivotant autour de l'axe de l'enrouleur (10).

2. Chaîne à neige pour véhicule automobile selon la revendication 1, **caractérisée en ce que** le levier (15) destiné à l'entraînement de l'enrouleur (9) comprend une chape dans laquelle est articulée l'axe de l'enrouleur (10).

3. Chaîne à neige pour véhicule automobile selon l'une des revendications 1 et 2, **caractérisée en ce que** le boîtier (7) est équipé d'un cliquet de verrouillage (16) de la roue à rochets (14), le levier (15) est équipé d'un cliquet d'entraînement (19) de la roue à rochets (14), ces deux cliquets étant maintenus en pression élastique contre la roue à rochets (14).

4. Chaîne à neige pour véhicule automobile selon la revendication 3, **caractérisée en ce que** le cliquet de verrouillage (16) est constitué par une lame guidée dans deux fentes (17) ménagées dans les deux parois latérales du boîtier (7), cette lame dépassant vers l'extérieur pour permettre un blocage du cliquet (16).

5. Chaîne à neige pour véhicule automobile selon une des revendications 3 et 4, **caractérisée en ce que** le cliquet d'entraînement (19) est constitué par une lame guidée dans deux fentes (20) ménagées dans les deux parois latérales du levier (15), cette lame dépassant vers l'extérieur pour permettre l'actionnement manuel du cliquet (19) à l'encontre des moyens élastiques qui lui sont associés.

6. Chaîne à neige pour véhicule automobile selon la revendication 5, **caractérisée en ce qu'**au moins une des ailes de la chape du boîtier (7) comporte une butée (23) limitant le mouvement de pivotement du levier (15) d'entraînement du cliquet (19), un encoche (24) étant prévue au-delà de la butée (23) destinée à recevoir le cliquet d'entraînement (19) et à maintenir celui-ci en position d'ouverture lors de l'opération de détension de la sangle (12).

7. Chaîne à neige pour véhicule automobile selon la revendication 8, **caractérisée en ce que** le cliquet de verrouillage (16) prend appui sur au moins une rampe (26) ménagée sur une des ailes du levier (15), la hauteur de cette rampe augmentant de façon à supprimer le contact entre le cliquet de verrouillage (16) et la roue à rochet (14) en position d'ouverture.

8. Chaîne à neige pour véhicule automobile selon l'une des revendications 4 à 7, **caractérisée en ce qu'**une encoche de blocage (25) du cliquet de verrouillage (16) en position fermée est ménagée dans au moins une aile du levier (15), la partie du cliquet de verrouillage (16) dépassant du boîtier (7) étant destinée à être logée dans l'encoche de blocage (25) ménagé dans l'aile du levier (15).

9. Chaîne à neige pour véhicule automobile selon l'une des revendications 1 à 8, **caractérisée en ce que** le boîtier (7) est fixé directement à une extrémité de l'arceau extérieur (5) tandis que la sangle (12) de l'enrouleur (9) est équipée d'un crochet (13) destiné à s'accrocher à l'autre extrémité de l'arceau extérieur (5).

10. Chaîne à neige pour véhicule automobile selon l'une des revendications 1 à 8, cataractérisée en ce que le boîtier (7) est fixé à une extrémité de l'arceau extérieur (5) par un tronçon de chaîne (27) destiné à passer, de façon réglable, dans un étrier (28) solidaire de l'autre extrémité de l'arceau extérieur (5), l'extrémité de la sangle (12) étant équipée d'un crochet (13) étant fixé à une extrémité d'un ressort (29) dont l'autre extrémité est destinée à être accrochée à l'arceau extérieur (5) en un point de celui-ci sensiblement diamétralement opposé à l'étrier (28).

11. Chaîne à neige pour véhicule automobile selon l'une des revendications 1 à 8, cataractérisée en ce que l'extrémité de la sangle (12) étant équipée d'un crochet (13) est fixée à une extrémité de l'arceau extérieur (5) par un tronçon de chaîne (30) destiné à passer, de façon réglable, dans un étrier (32) solidaire de l'autre extrémité de l'arceau extérieur (5), le boîtier (7) étant fixé à une extrémité d'un tronçon de chaîne (33) destiné à être accrochée à l'arceau extérieur (5) en un point de celui-ci sensiblement diamétralement opposé à l'étrier (32), deux tronçons de chaînes de l'arceau extérieur (5) sensiblement diamétralement opposés entre eux et situés au milieux du demi-cercle délimités par l'étrier (32) et le point de fixation du tronçon de chaîne (33) relié au boitier (7) sur l'arceau extérieur (5) étant remplacés par des ressorts (26).
